# EUROPÄISCHE PATENTSCHRIFT

(11) **EP 3 137 248 B1**
(45) Veröffentlichungstag und Bekanntmachung des Hinweises auf die Patenterteilung: **13.10.2021**
(21) Anmeldenummer: 15719628.8
(22) Anmeldetag: 09.04.2015
(51) Int. Cl.: B23B 29/03, B23D 77/00, B23C 5/20

(54) **ZERSPANUNGSWERKZEUG MIT FESTSTEHENDEN UND FEDERND GELAGERTEN FÜHRUNGSLEISTEN**
MACHINING TOOL WITH STATIONARY AND SPRING-MOUNTED GUIDE STRIPS
OUTIL D'USINAGE PAR ENLÈVEMENT DE COPEAUX ÉQUIPÉ DE BARRES DE GUIDAGE FIXES ET MONTÉES DE MANIÈRE ÉLASTIQUE

(30) Priorität: 29.04.2014 DE 102014208102
(43) Veröffentlichungstag der Anmeldung: 08.03.2017
(73) Patentinhaber: MAPAL Fabrik für Präzisionswerkzeuge Dr. Kress KG, 73431 Aalen (DE)
(72) Erfinder: KRESS, Dieter, 73431 Aalen (DE)
(74) Vertreter: Kordel, Mattias
(86) Internationale Anmeldenummer: PCT/EP2015/057682
(87) Internationale Veröffentlichungsnummer: WO 2015/165706

(56) Entgegenhaltungen:
- EP-A1- 1 317 985
- EP-A1- 1 955 797
- WO-A1-2010/096005
- WO-A2-98/39127
- DE-A1- 2 237 743
- DE-A1- 2 833 778
- US-A- 1 407 560

## Beschreibung

### Beschreibung

Die Erfindung betrifft ein Zerspanungswerkzeug zur Herstellung und/oder Bearbeitung von Bohrungen mit einem eine Mittelachse und eine Umfangsfläche aufweisenden Grundkörper, mindestens zwei geometrisch definierten Schneiden, die in Umfangsrichtung des Zerspanungswerkzeugs gesehen mit ungleicher Teilung an der Umfangsfläche des Grundkörpers vorgesehen sind, und einer Anzahl von die Umfangsfläche des Grundkörpers überragenden Führungsleisten.

Zerspanungswerkzeuge der hier angesprochenen Art sind bekannt. Sie weisen mindestens zwei geometrisch definierte Schneiden auf, die in Umfangsrichtung des Zerspanungswerkzeugs gesehen, in ungleicher Teilung in der Umfangsfläche des Werkzeugs vorgesehen sind. Sie sind außerdem mit einer Anzahl von Führungsleisten versehen. Die Ungleichteilung bei der Anordnung der Schneiden ist bekannt (DE 203 19 341 U1; DE 10 2008 025 962 A1). Sie wird stets dann vorgesehen, wenn das Zerspanungswerkzeug innerhalb der Bohrung einen ruhigen Lauf aufweisen soll. Bei der Bearbeitung von Bohrungen werden über die mindestens zwei Schneiden Kräfte in den Grundkörper des Zerspanungswerkzeugs eingeleitet, die zu Vibrationen und zu Rattern führen können. Dadurch werden die Schneiden sehr belastet. Dies führt einerseits zu einem relativ raschen Verschleiß der Schneiden, aber andererseits insbesondere dazu, dass die erzielte Bohrungsoberfläche nicht die gewünschten Eigenschaften bezüglich Oberflächenqualität und Rundheit aufweist. Das Phänomen der Vibrationen taucht insbesondere bei der Bearbeitung langer Bohrungen auf, weil in diesen Fällen das Zerspanungswerkzeug relativ lang ausgebildet sein muss und es daher schwierig ist, eine ausreichende Stabilität des Werkzeugs zu gewährleisten. Es hat sich nach allem herausgestellt, dass selbst bei der bekannten Ungleichteilung bezüglich der Anordnung der Schneiden am Umfang des Zerspanungswerkzeugs Schwingungen und Vibrationen auftreten, insbesondere bei der Bearbeitung langer Bohrungen, die nicht nur das Werkzeug, sondern auch die Bohrungsoberfläche stark beeinträchtigen.

DE 28 33 778 A1 offenbart ein Zerspanungswerkzeug mit den Merkmalen des Oberbegriffs des Anspruchs 1.

Aufgabe der Erfindung ist es daher, ein Zerspanungswerkzeug der hier angesprochenen Art zu schaffen, welches diesen Nachteil nicht aufweist und sich dadurch auszeichnet, dass auch und insbesondere bei der Bearbeitung von langen Bohrungen die Schwingungsneigung des Werkzeugs stark reduziert ist.

Zur Lösung dieser Aufgabe wird ein Zerspanungswerkzeug geschaffen, welches die Merkmale des Anspruchs 1 umfasst. Das Zerspanungswerkzeug zur Herstellung und/oder Bearbeitung von Bohrungen umfasst demnach einen eine Mittelachse und eine Umfangsfläche aufweisenden Grundkörper mit mindestens zwei geometrisch definierten Schneiden, die - in Umfangsrichtung des Zerspanungswerkzeugs gesehen - mit ungleicher Teilung an der Umfangsfläche des Zerspanungswerkzeugs vorgesehen sind. Das heißt, dass bei einem Zerspanungswerkzeug mit zwei Schneiden diese nicht gegenüberliegend in der Umfangsfläche angeordnet sind, und dass bei Zerspanungswerkzeugen mit mehr als zwei Schneiden diese mit ungleichem Umfangsabstand zueinander angeordnet sind. Das Zerspanungswerkzeug weist außerdem eine Anzahl von dessen Umfangsfläche überragende Führungsleisten auf. Das zur Lösung dieser Aufgabe vorgeschlagene Werkzeug zeichnet sich dadurch aus, dass zwei der die Umfangsfläche des Zerspanungswerkzeugs überragenden Führungsleisten feststehend ausgebildet, also fest mit dem Grundkörper des Zerspanungswerkzeugs verbunden oder als integraler Bestandteil desselben ausgebildet sind. Sie sind in einem Umfangsabstand von weniger als 180° zueinander angeordnet, also nicht gegenüberliegend, sodass zwischen ihnen ein erster und zweiter Umfangsbereich gebildet wird, wobei sich der erste Umfangsbereich über einen Umfangswinkel von mehr als 180° erstreckt und der zweite Umfangsbereich über einen Bereich von weniger als 180°. Das Zerspanungswerkzeug zeichnet sich weiter dadurch aus, dass von den mindestens zwei geometrisch definierten Schneiden eine in dem zweiten Umfangsbereich, der sich über weniger als 180° erstreckt, zwischen den feststehenden Führungsleisten angeordnet ist. Von den Führungsleisten dieses Zerspanungswerkzeugs ist wenigstens eine federnd am Grundkörper des Zerspanungswerkzeugs gelagert, sodass sie mehr oder weniger weit über die Umfangsfläche des Grundkörpers hinausragt. Sie ist mit einer Vorspannung beaufschlagt, welche die federnde Führungsleiste radial nach außen drängt. Durch die Federkraft der federnd gelagerten Führungsleiste wird das Zerspanungswerkzeug bei der Bearbeitung und/oder Herstellung einer Bohrung gegen die beiden feststehenden Führungsleisten elastisch angepresst.

Bei einem bevorzugten Ausführungsbeispiel des Zerspanungswerkzeugs ist vorgesehen, dass die feststehenden Führungsleisten in einer definierten Position an der Umfangsfläche des Zerspanungswerkzeugs vorgesehen sind, wobei sie diese natürlich überragen. Bei der Anordnung dieser Führungsleisten wird wie folgt vorgegangen: Bei der Bearbeitung und/oder Herstellung einer Bohrung mittels der mindestens zwei Schneiden werden über diese Kräfte, die Schnittkräfte, in den Grundkörper des Zerspanungswerkzeugs eingeleitet. Es ergibt sich dabei eine Resultierende der in die Schneiden eingeleiteten Kräfte, die radial von der Mittelachse des Zerspanungswerkzeugs nach außen gerichtet ist. Bei dem hier angesprochenen Ausführungsbeispiel ist vorgesehen, dass diese Resultierende in dem zweiten Umfangsbereich zwischen den beiden feststehenden Führungsleisten verläuft und die Umfangsfläche des Zerspanungswerkzeugs schneidet.

Ein weiteres bevorzugtes Ausführungsbeispiel zeichnet sich dadurch aus, dass der Radius des Flugkreises zumindest der zwischen den feststehenden Führungsleisten liegenden Schneide größer ist als der feststehenden Führungsleisten, zumindest sofern diese keinem Verschleiß unterworfen sind.

Ein weiteres bevorzugtes Ausführungsbeispiel zeichnet sich dadurch aus, dass der Radius des Flugkreises der mindestens einen federnden Führungsleiste größer ist als der zwischen den feststehenden Führungsleisten liegenden Schneide und/oder der der feststehenden Führungsleisten.

Schließlich zeichnet sich ein Ausführungsbeispiel des Zerspanungswerkzeugs dadurch aus, dass dieses als Reibahle ausgebildet ist.

Weitere Ausgestaltungen des Zerspanungswerkzeugs ergeben sich aus den übrigen Unteransprüchen.

Die Erfindung wird im Folgenden anhand der Zeichnung näher erläutert. Es zeigen:
- Figuren 1 bis 3: Prinzipskizzen von Zerspanungswerkzeugen in Vorderansicht;
- Figur 4: ein Ausführungsbeispiel eines Zerspanungswerkzeugs mit fünf Schneiden in Vorderansicht;
- Figur 5: eine Längsschnittdarstellung einer feststehenden Führungsleiste und
- Figur 6: eine Längsschnittdarstellung einer federnden Führungsleiste.

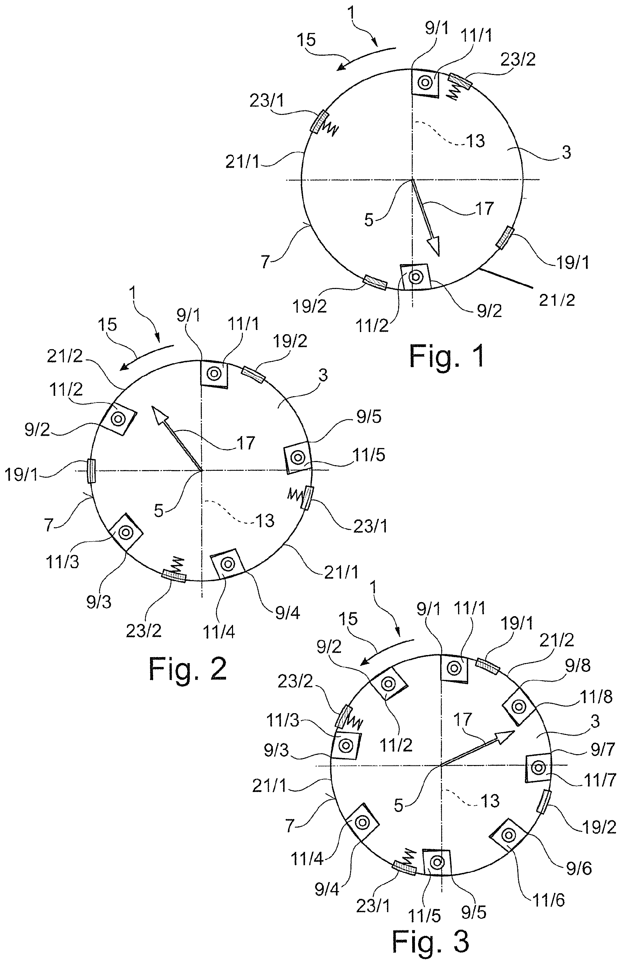

Figur 1 zeigt eine Prinzipskizze eines Zerspanungswerkzeugs 1 in Draufsicht auf dessen Stirnseite. Es weist einen Grundkörper 3 mit einer senkrecht zur Bildebene von Figur 1 verlaufenden Mittelachse 5 sowie mit einer Umfangsfläche 7 auf. Das in Figur 1 wiedergegebene Ausführungsbeispiel des Zerspanungswerkzeugs 1 weist zwei Schneiden 9/1 und 9/2 auf, die entweder aus dem Grundkörper 3 des Zerspanungswerkzeugs 1 herausgearbeitet sind, oder aber, wie üblich, Teil von Messerplatten 11/1 und 11/2 sind. Es handelt sich hier nicht um in den Grundkörper 3 eingesetzte mehr oder weniger undefinierte Schleifkörper, wie sie bei Schleifwerkzeugen vorgesehen sind, sondern um geometrisch definierte Schneiden, die durch die Schnittlinie zweier Flächen gebildet werden.

Die erste Schneide 9/1 ist oben an dem Zerspanungswerkzeug 1 ausgebildet und berührt eine gedachte senkrechte Durchmesserlinie des Zerspanungswerkzeugs 1. Es zeigt sich, dass die beiden Schneiden 9/1 und 9/2 des hier dargestellten Ausführungsbeispiels, wie bei allen Ausführungsbeispielen, mit ungleicher Teilung am Grundkörper 3 angeordnet sind. Das heißt, die zweite Schneide 9/2 ist nicht diametral gegenüberliegend zur ersten Schneide 9/1 im Grundkörper 3 angeordnet. Sie liegt vielmehr rechts von der Durchmesserlinie 13. Das in Figur 1 dargestellte Ausführungsbeispiel des Zerspanungswerkzeugs 1 weist eine Anzahl von die Umfangsfläche 7 des Zerspanungswerkzeugs 1 überragenden Führungsleisten auf, die als integraler Bestandteil des Grundkörpers 3 ausgebildet sein können, vorzugsweise aber als separate Teile ausgelegt sind, die in den Grundkörper 3 eingebrachten Nuten untergebracht sind. Die Führungsleisten dienen dazu, das Zerspanungswerkzeug 1 bei der Herstellung und/oder Bearbeitung von Bohrungen an der Bohrungswand abzustützen. Derartige Führungsleisten sind bekannt, sodass grundsätzlich nicht näher darauf eingegangen wird.

Die hier gewählte Anordnung der beiden Schneiden 9/1 und 9/2 mit ungleicher Teilung an der Umfangsfläche 7 des Zerspanungswerkzeugs 1 dient dazu, einen ruhigen Lauf des Zerspanungswerkzeugs 1 bei der Herstellung und/oder Bearbeitung von Bohrungen zu gewährleisten. Die hier angesprochenen Werkzeuge werden in Rotation versetzt und einer Vorschubbewegung in Richtung der Mittelachse 5 unterworfen. Die geometrisch definierten Schneiden tragen von dem Werkstück Späne ab. Dabei werden über die Schneiden als Schneidkräfte bezeichnete Kräfte in den Grundkörper 3 eingeleitet, bei dem hier dargestellten zweischneidigen Zerspanungswerkzeug 1 also oben im Bereich der Durchmesserlinie 13 und unten versetzt zu dieser Durchmesserlinie 13, wobei die hier unten liegende zweite Schneide 9/2 der Durchmesserlinie 13 voreilt. Dabei wird davon ausgegangen, dass das hier dargestellte Zerspanungswerkzeug bei der Herstellung und/oder Bearbeitung von Bohrungen bei der hier gewählten Draufsicht auf die Stirnseite des Werkzeugs entsprechend dem Pfeil 15 gegen den Uhrzeigersinn rotiert. Die auf die beiden Schneiden 9/1 und 9/2 wirkenden Kräfte addieren sich zu einer Schnittkraft-Resultierenden 17, die durch einen Doppelpfeil dargestellt ist. Dieser verläuft von der Mittellinie 5 nach rechts unten unter einem spitzen Winkel zur Durchmesserlinie 13.

Figur 1 zeigt, dass das hier wiedergegebene Ausführungsbeispiel des Zerspanungswerkzeugs 1 zwei feststehende Führungsleisten 19/1 und 19/2 aufweist. Hier sind in den Grundkörper 3 eingelassene Leistenelemente wiedergegeben, deren Außenfläche die Umfangsfläche 7 des Grundkörpers 3 überragen. Wesentlich ist, dass die beiden feststehenden Führungsleisten 19/1 und 19/2 in einem Umfangsabstand zueinander angeordnet sind, der weniger als 180° beträgt. Es lässt sich somit ein erster Umfangsbereich 21/1 definieren, der sich über einen Umfangswinkel von mehr als 180° erstreckt. Es ergibt sich überdies ein zweiter Umfangsbereich 21/2, der sich über weniger als 180° erstreckt. Das Zerspanungswerkzeug 1 zeichnet sich dadurch aus, dass zwischen den beiden feststehenden Führungsleisten 19/1 und 19/2 im zweiten Umfangsbereich 21/2 eine der geometrisch definierten Schneiden, hier die zweite Schneide 9/2 angeordnet ist.

Die beiden feststehenden Führungsleisten 19/1 und 19/2 sind so in der Umfangsfläche 7 des Grundkörpers 3 angeordnet, dass die Resultierende 17 zwischen diesen hindurchläuft, also in dem zweiten Umfangsbereich 21/2 angeordnet ist, wodurch das Zerspanungswerkzeug 1 an die Bohrungswand angedrückt wird.

Das in Figur 1 dargestellte Zerspanungswerkzeug 1 weist mindestens eine federnd im Grundkörper 3 des Werkzeugs 1 gelagerte Führungsleiste 23/1 auf. Diese dient dazu, das Zerspanungswerkzeug 1 bei der Bearbeitung und/oder Herstellung einer Bohrung gegen die feststehenden Führungsleisten 19/1, 19/2 zusätzlich federnd anzupressen. Da die Resultierende 17 bei der Herstellung und/oder Bearbeitung einer Bohrung aufgrund von Materialabweichungen, verschiedener Schnitttiefen und gegebenenfalls Ungleichmäßigkeiten in der Innenkontur der Bohrung variieren, kann auch die Resultierende 17 ihre Richtung und ihren Betrag ändern. Um eine sichere Anlage des Zerspanungswerkzeugs 1 an den feststehenden Führungsleisten 19/1 und 19/2 zu gewährleisten, sind bei dem hier dargestellten Ausführungsbeispiel vorzugsweise zwei federnde Führungsleisten 23/1 und 23/2 vorgesehen, von denen die erste Führungsleiste 23/1 der ersten Schneide 9/1 voreilt und die zweite federnde Führungsleiste 23/2 nacheilt.

Figur 2 zeigt eine Prinzipskizze eines in Vorderansicht wiedergegebenen zweiten Ausführungsbeispiels eines Zerspanungswerkzeugs 1. Gleiche und funktionsgleiche Elemente sind mit gleichen Bezugszeichen versehen, sodass insofern auf die vorangegangene Beschreibung verwiesen wird.

Das zweite Ausführungsbeispiel unterscheidet sich von dem in Figur 1 dargestellten dadurch, dass bei dem Zerspanungswerkzeug 1 fünf geometrisch definierte Schneiden 9/1 bis 9/5 vorgesehen sind, wobei die erste Schneide 9/1 wiederum oben am Grundkörper 3 angeordnet ist und die gedachte vertikale Durchmesserlinie 13 berührt. In Drehrichtung gesehen sind die weiteren Schneiden 9/2 bis 9/5 gegenüber der ersten Schneide 9/1 voreilend angeordnet. Auch hier ist vorgesehen, dass die Umfangsabstände der Schneiden so gewählt sind, dass sich eine ungleiche Teilung ergibt, also die Winkel zwischen je zwei aufeinanderfolgenden Schneiden nicht gleich sind.

Eine Ungleichteilung der Anordnung der Schneiden ist grundsätzlich bekannt, insbesondere dann, wenn ein Fachmann ein Zerspanungswerkzeug 1 so auslegen möchte, dass es bei der Herstellung und/oder Bearbeitung von Bohrungen möglichst wenig vibriert und rattert, sondern sich vielmehr durch einen ruhigen Lauf auszeichnet.

Durch die in die fünf Schneiden eingeleiteten Kräfte bei der Herstellung und/oder Bearbeitung von Bohrungen ergibt sich hier eine Schnittkraft-Resultierende 17, welche die Umfangsfläche 7 in einem Bereich schneidet, der der ersten Schneide 9/1 - in Richtung der durch den Pfeil 15 angedeuteten Drehrichtung gesehen - voreilt. Es ergibt sich hier zwischen der Durchmesserlinie 13 und der Resultierenden 17 ein Winkel von circa 40°.

Auch das in Figur 2 dargestellte Ausführungsbeispiel des Zerspanungswerkzeugs 1 weist wiederum zwei feststehende Führungsleisten 19/1 und 19/2 auf, wobei die erste Führungsleiste 19/1 einem Bereich voreilt, in dem die Resultierende 17 die Umfangsfläche 7 in dem zweiten Umfangsbereich 21/2 schneidet. Die zweite feststehende Führungsleiste 19/2 eilt diesem Bereich nach.

In dem sich durch die feststehenden Führungsleisten 19/1 und 19/2 ergebenden ersten Umfangsbereich 21/1 ist wiederum mindestens eine, hier zwei federnde Führungsleisten 23/1 und 23/2 angeordnet, die dazu dienen, das Zerspanungswerkzeug 1 bei der Herstellung und/oder Bearbeitung von Bohrungen gegen die feststehenden Führungsleisten 19/1 und 19/2 federnd anzupressen, sodass sich ein ruhiger vibrationsarmer Lauf des Zerspanungswerkzeugs 1 ergibt.

Von den fünf Schneiden 9/1 bis 9/5 des in Figur 2 dargestellten Ausführungsbeispiels des Zerspanungswerkzeugs 1 liegen hier, in Abweichung gegenüber dem ersten Ausführungsbeispiel in dem zweiten Umfangsbereich 21/2, zwei Schneiden, nämlich die erste Schneide 9/1 und die zweite Schneide 9/2.

Die von den federnden Führungsleisten 23/1 und 23/2 aufgebauten elastischen Kräfte drücken also das Zerspanungswerkzeug 1 in einem Bereich gegen die Bohrungswand, in dem mindestens eine Schneide, hier zwei Schneiden 9/1 und 9/2, liegen und in dem auch der Bereich liegt, in dem die Resultierende 17 die Umfangsfläche 7 des Grundkörpers 3 schneidet. Die Wirkung der Resultierenden 17 wird folglich durch die mindestens eine federnde Führungsleiste verstärkt.

Figur 3 zeigt ein weiteres Ausführungsbeispiel eines Zerspanungswerkzeugs, wobei auch hier, wie bei den früheren Darstellungen, eine Prinzipskizze wiedergegeben ist, welche das Zerspanungswerkzeug 1 in Vorderansicht zeigt. Gleiche und funktionsgleiche Elemente sind mit gleichen Bezugszeichen versehen, sodass insofern auf die vorangegangene Beschreibung verwiesen wird.

Das in Figur 3 wiedergegebene Ausführungsbeispiel unterscheidet sich von den vorangegangenen dadurch, dass es acht geometrisch definierte Schneiden 9/1 bis 9/8 aufweist, die - in Umfangsrichtung des Werkzeugs gesehen - mit ungleicher Teilung an der Umfangsfläche 7 des Zerspanungswerkzeugs 1 vorgesehen sind. Auch hier liegt die erste Schneide 9/1 oben im Bereich einer senkrechten Durchmesserlinie 13. Die weiteren Schneiden 9/2 bis 9/8 eilen - in der durch den Pfeil 15 angedeuteten Drehrichtung gesehen - der ersten Schneide 9/1 vor.

Bei der Herstellung und/oder Bearbeitung von Bohrungen werden über die Schneiden Kräfte in das Zerspanungswerkzeug 1 eingeleitet, deren Resultierende 17 auch hier durch einen Doppelpfeil angedeutet ist, die der ersten Schneide 9/1 weniger als 90° nacheilt. Auch das hier dargestellte Ausführungsbeispiel weist zwei feststehende Führungsleisten 19/1 und 19/2 auf, wobei auch hier der Bereich der Umfangsfläche 7, in dem die Resultierende 17 diese schneidet, der zweite Umfangsbereich 21/2, zwischen den feststehenden Führungsleisten 19/1, 19/2 liegt.

Das Zerspanungswerkzeug 1 weist mindestens eine, hier zwei federnde Führungsleisten 23/1 und 23/2 auf, die mit einer Federkraft gegen eine Bohrungswand einer hergestellten und/oder bearbeiteten Bohrung drücken und damit das Zerspanungswerkzeug 1 mit den feststehenden Führungsleisten 19/1, 19/2 gegen die Bohrungswand anpressen. Die Federkraft der mindestens einen federnden Führungsleiste wirkt, wie bei den vorangegangenen Ausführungsbeispielen, so, dass das Zerspanungswerkzeug 1 im Wesentlichen in Richtung der Resultierenden 17 gedrückt und an die Bohrungswand angelegt wird. Dadurch ergibt sich ein besonders ruhiger und vibrationsarmer Lauf des Zerspanungswerkzeugs 1, sodass auch sehr lange Bohrungen vibrationsarm bearbeitet werden können, weil ein Rattern des Werkzeugs im hohen Maße unterbunden wird.

Wie bei dem Ausführungsbeispiel gemäß Figur 2 ist auch bei dem in Figur 3 dargestellten Ausführungsbeispiel des Zerspanungswerkzeugs 1 vorgesehen, dass im zweiten Umfangsbereich 21/2, der sich über weniger als 180° erstreckt und zwischen den feststehenden Führungsleisten 19/1, 19/2 liegt, zwei Schneiden vorgesehen sind, hier die Schneiden 9/7 und 9/8.

Allen Ausführungsbeispielen ist gemeinsam, dass die Schneiden geometrisch definiert und vorzugsweise Teil einer an dem Grundkörper 3 befestigten Messerplatte 11 sind.

Aus den Erläuterungen zu den Figuren 1 bis 3 wird deutlich, dass sämtliche Ausführungsbeispiele des Zerspanungswerkzeugs 1 mindestens zwei geometrisch definierte Schneiden 9 aufweisen, die mit ungleicher Teilung an der Umfangsfläche des Zerspanungswerkzeugs 1 vorgesehen sind. Übereinstimmend ist auch vorgesehen, dass sämtliche Ausführungsbeispiele zwei feststehende Führungsleisten 19/1 und 19/2 aufweisen, die sich nicht diametral gegenüberliegen, sodass ein erster Umfangsbereich 21/1 mit mehr als 180° Umfangswinkel und ein zweiter Umfangsbereich 21/2 mit einem Umfangswinkel von weniger als 180° geschaffen wird. Zwischen den feststehenden Führungsleisten 19/1 und 19/2 ist mindestens eine geometrisch definierte Schneide angeordnet. Die den in die Schneiden eingeleiteten Kräfte zugehörige Schnittkraft-Resultierende 17 weist gemäß dem Doppelpfeil ausgehend von der Mittelachse 5 radial nach außen und schneidet die Umfangsfläche in einem Bereich, der zwischen den feststehenden Führungsleisten 19/1 und 19/2 liegt, und zwar in dem zweiten Umfangsbereich 21/2.

Bei der Herstellung und/oder Bearbeitung einer Bohrung wird das Zerspanungswerkzeug 1 durch mindestens eine federnde Führungsleiste 23 so gegen die Bohrungswand angelegt, dass die feststehenden Führungsleisten 19/1, 19/2 gegen die Bohrungswand elastisch federnd angedrückt werden.

Der ohnehin bei Werkzeugen mit in ungleicher Teilung angeordneten Schneiden gegebene ruhige Lauf während der Herstellung und/oder Bearbeitung von Bohrungen wird durch die hier beschriebene Ausgestaltung des Zerspanungswerkzeugs 1 noch verbessert, weil zwei feststehende Führungsleisten und mindestens eine elastisch federnde Führungsleiste vorgesehen sind, welche die feststehenden Führungsleisten gegen die Bohrungswand andrücken.

Die Außenseiten der feststehenden Führungsleisten 19/1, 19/2 liegen auf einen Flugkreis, dessen Radius größer ist als der der Umfangsfläche 7. Die mindestens eine zwischen den feststehenden Führungsleisten 19/1 und 19/2 im zweiten Umfangsbereich angeordnete Schneide liegt auf einem Flugkreis, dessen Radius größer ist als der der feststehenden Führungsleisten.

Die federnden Führungsleisten liegen auf einem Flugkreis, dessen Radius zumindest außerhalb einer Bohrung größer ist als der der feststehenden Führungsleisten 19/1 und 19/2.

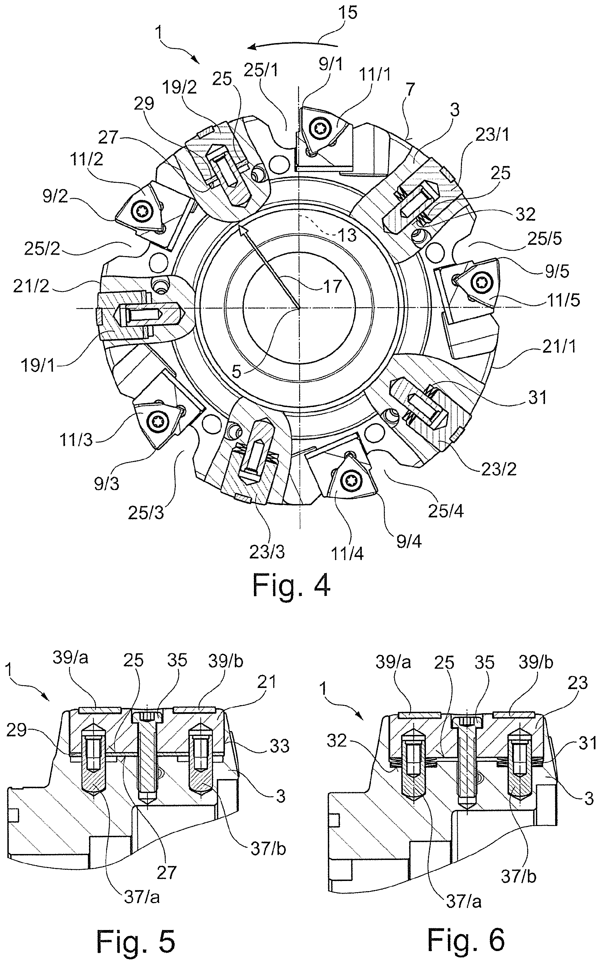

Figur 4 zeigt ein weiteres Ausführungsbeispiel eines Zerspanungswerkzeugs 1. Gleiche und funktionsgleiche Elemente sind mit gleichen Bezugszeichen versehen, sodass insofern auf die vorangegangene Beschreibung verwiesen wird.

Das hier dargestellte Zerspanungswerkzeug 1 ist, wie in den Figuren 1 bis 3, in Stirnseitenansicht wiedergegeben, wobei die Bereiche, in denen Führungsleisten in den Grundkörper 3 des Zerspanungswerkzeugs 1 eingesetzt sind, im Teil-Querschnitt wiedergegeben sind.

Das hier dargestellte Zerspanungswerkzeug 1 weist, wie das in Figur 2 dargestellte Ausführungsbeispiel, fünf Schneiden 9/1 bis 9/5 auf, die auch hier vorzugsweise Teil einer in den Grundkörper 3 des Zerspanungswerkzeugs 1 eingesetzten Messerplatte 11/1 bis 11/5 ist. Die erste Schneide 9/1 ist wiederum so angeordnet, dass sie auf einer gedachten vertikalen Durchmesserlinie 13 angeordnet ist. Ihr eilen die weiteren Schneiden 9/2 bis 9/5 in Bezug auf die durch einen Pfeil 15 dargestellte Drehrichtung des Zerspanungswerkzeugs 1 vor. Jeder Schneide ist, wie bekannt, jeweils ein Spanraum voreilend zugeordnet, in welchen die bei der Herstellung und/oder Bearbeitung einer Bohrung von den Schneiden abgetragenen Späne gelangen. Hier ist der Spanraum 25/1 der Schneide 9/1 zugeordnet, entsprechend ist der Spanraum 25/2 der Schneide 9/2 zugeordnet und so weiter.

Den Figuren ist zu entnehmen, dass eine der feststehenden Führungsleisten dem Bereich der Umfangsfläche 7, den die Resultierende 17 schneidet, voreilt und eine diesem nacheilt. Die beiden feststehenden Führungsleisten schließen dabei, wie gesagt, einen Winkel von weniger als 180° ein, vorzugsweise beträgt der Winkel 120° und weniger, er kann auch weniger als 45° betragen. Dabei ist es nicht erforderlich, dass die feststehenden Führungsleisten 19/1 und 19/2 symmetrisch zu der Resultierenden 17 angeordnet sind, also um denselben Umfangswinkel der Resultierenden 17 vor- beziehungsweise nacheilen.

Das hier wiedergegebene Ausführungsbeispiel des Zerspanungswerkzeugs 1 weist zwei feststehende Führungsleisten 19/1 und 19/2 auf, die über ein geeignetes Befestigungsmittel an dem Grundkörper 3 verankert sind. Zwischen der der Mittelachse 5 zugewandten Unterseite 25 der Führungsleisten und einer Auflagefläche 27 am Grundkörper 3 ist eine starre Zwischenscheibe 29 vorgesehen, auf die auch verzichtet werden kann.

Der ersten Schneide 9/1 ist unmittelbar voreilend die feste Führungsleiste 19/2 und dieser voreilend die weitere Führungsleiste 19/1 vorgesehen.

Die beiden festen Führungsleisten 19/1 und 19/2 teilen die Umfangsfläche 7, wie oben beschrieben, in einen ersten Umfangsbereich 21/1 und in einen zweiten Umfangsbereich 21/2, wobei sich der erste Umfangsbereich 21/1 über einen Umfangswinkel von mehr als 180° erstreckt und der zweite Umfangsbereich 21/2 über einen Umfangswinkel von weniger als 180°. In diesem zweiten Umfangsbereich 21/2 ist hier mindestens eine Schneide, hier die Schneide 9/2, angeordnet.

Das Zerspanungswerkzeug 1 weist eine Anzahl von Führungsleisten auf, wobei neben den beiden feststehenden Führungsleisten 19/1 und 19/2, wie bei den oben beschriebenen Ausführungsbeispielen, wenigstens eine federnde Führungsleiste 23 vorgesehen ist. Diese drückt den Grundkörper 3 bei der Herstellung und/oder Bearbeitung einer Bohrung mittels des Zerspanungswerkzeugs 1 gegen die Bohrungsoberfläche, sodass die festen Führungsleisten 19/1, 19/2 sicher anliegen und ein Rattern beziehungsweise Vibrationen mit hoher Sicherheit vermieden werden, selbst bei langen Bohrungen.

Es wird deutlich, dass das hier dargestellte Ausführungsbeispiel drei federnde Führungsleisten 23/1 bis 23/3 aufweist, welche sich mit ihrer Unterseite 25 über elastische Mittel, hier ein elastisches Element 31 an einer Anlagefläche 32 abstützt, wenn die federnden Führungsleisten 23 am Grundkörper 3 befestigt werden.

Das elastische Element 31 ist hier beispielhaft als Federpaket ausgebildet, welches insbesondere Tellerfedern umfasst.

Auch bei der Darstellung gemäß Figur 4 ist festzustellen, dass die mindestens eine federnde Führungsleiste 23, falls mehr als eine vorgesehen ist, sämtliche Führungsleisten, in dem durch die feststehenden Führungsleisten 19 definierten ersten Umfangsbereich 21/1 angeordnet sind, der sich über einen Umfangswinkel von mehr als 180° erstreckt.

Die Vorderansicht gemäß Figur 4 zeigt noch, dass ein Zerspanungswerkzeug 1 mit fünf Schneiden 9/1 bis 9/5 auch mehr als zwei federnde Führungsleisten aufweisen kann, wie sie in den Figuren 1 bis 3 dargestellt sind. Hier sind drei im ersten Umfangsbereich 21/1 angeordnete federnde Führungsleisten 23/1 bis 23/3 vorgesehen.

Feste und federnde Führungsleisten sind grundsätzlich bekannt, auch deren Anbringung an einem Grundkörper 3 eines Zerspanungswerkzeugs. Entscheidend ist hier die spezielle, oben beschriebene Anordnung im ersten Umfangsbereich 21/1.

Figur 5 zeigt eine feststehende Führungsleiste 21, die in einer Nut 33 im Grundkörper 3 des Zerspanungswerkzeugs 1 untergebracht ist, von dem hier lediglich ein Teilbereich dargestellt ist.

Die feststehende Führungsleiste 21 wird vorzugsweise von der Nut 33 rundum aufgenommen, sodass die Abstützkräfte gut auf den Grundkörper 3 übertragen werden können. Sie ist über eine mittig angeordnete Schraube 35 am Grundkörper 3 befestigt, welche die Führungsleiste 21 durchgreift. Zur besseren Sicherung der Führungsleiste 21 sind parallel zur Schraube 35 hier vorzugsweise rechts und links angeordnete Stifte 37/a und 37/b vorgesehen, die zum Teil in die Führungsleiste 21 und zum Teil in den Grundkörper 3 eingreifen.

Zwischen der Unterseite 25 der Führungsleiste 23 und einer Auflagefläche 27 ist hier eine feste Zwischenscheibe 29 vorgesehen, die nicht zwingend erforderlich ist, aber dazu führt, dass die Kräfte gleichmäßig auf den Grundkörper 3 und die Unterseite 25 der Führungsleiste 21 verteilt werden. Durch verschieden dicke Zwischenscheiben 39 kann der gewünschte Überstand der Führungsleiste 23 über die Umfangsfläche 7 des Zerspanungswerkzeugs 1 exakt eingestellt werden. Für unterschiedliche Überstandswerte können identische Führungsleisten gewählt werden; es ist lediglich erforderlich, verschieden dicke Zwischenscheiben 39 einzusetzen.

Figur 6 zeigt im Längsschnitt eine federnde Führungsleiste 23, die am Grundkörper 3 des Zerspanungswerkzeugs 1 befestigt ist. Auch hier sind eine Schraube 35 und zwei Stifte 37/a und 37/b vorgesehen, wie sie anhand von Figur 5 erläutert wurden.

Es zeigt sich, dass zwischen der Unterseite 25 der federnden Führungsleiste 23 und der Anlagefläche 32 das elastische Element 31 vorgesehen ist, das vorzugsweise als Tellerfeder ausgebildet ist. Denkbar ist es, ringförmige Tellerfedern zu verwenden, die ein zentrales Loch aufweisen, welches von den Stiften 37/a und 37/b durchgriffen wird.

Statt der Tellerfedern können beliebige andere elastische Elemente Verwendung finden, wie sie dem Fachmann bekannt sind, beispielsweise Elastomere.

Entscheidend ist, dass die federnden Führungsleisten 23 an dem Grundkörper 3 mittels der Schraube 35 so befestigt werden, dass sie von dem elastischen Element 31 so weit nach außen gedrückt werden können, dass sie einen Flugkreis aufweisen, dessen Radius größer ist als der der Schneiden. Vorzugsweise ist dieser auch größer als der der feststehenden Führungsleisten 21. Die durch das elastische Element 31 von der Mittelachse 5 nach außen wirkenden Vorspannkräfte verlagern die federnde Führungsleiste 23 so weit nach außen, bis sie an den Kopf der Schraube 35 anschlagen. Es sind auch andere Ausführungsformen denkbar, einen Anschlag für die Auswärtsbewegung der federnden Führungsleisten 23 zu realisieren.

Entscheidend ist, dass die federnden Führungsleisten 23 mittels des elastischen Elements 31 das Zerspanungswerkzeug 1 bei der Herstellung und/oder Bearbeitung einer Bohrung gegen die Bohrungswand andrücken und zwar derart, dass die beiden feststehenden Führungsleisten 21 an der Bohrungswand anliegen, wobei die Wirkung der Resultierenden 17 verstärkt wird.

Vorzugsweise ist, wie in den Figuren 4 bis 6 dargestellt, vorgesehen, dass die radial außen liegenden Flächen der Führungsleisten verschleißfestes Material aufweisen oder daraus bestehen. Hier ist vorgesehen, dass in die Umfangsflächen jeweils mindestens ein verschleißfestes Element 39, vorzugsweise zwei verschleißfeste Elemente 39/a aufgelegt beziehungsweise eingebracht sind.

Ein besonders bevorzugtes Ausführungsbeispiel des Zerspanungswerkzeugs 1 zeichnet sich dadurch aus, dass dieses als Reibahle ausgebildet ist, die zur Feinbearbeitung von Bohrungen dient.

Zusammenfassend ist festzustellen, dass sich das Zerspanungswerkzeug 1 dadurch auszeichnet, dass es mindestens zwei Schneiden 9/1, 9/2 aufweist, die mit ungleicher Teilung an der Umfangsfläche 7 des Grundkörpers 3 des Zerspanungswerkzeugs 1 vorgesehen sind. Bei der Herstellung und/oder Bearbeitung einer Bohrung werden Schnittkräfte in die Schneiden eingeleitet, die eine Schnittkraft-Resultierende 17 ergeben.

Das Zerspanungswerkzeug 1 weist zwei feststehende Führungsleisten 19/1, 19/2 auf, die so angeordnet sind, dass die Schnittkraft-Resultierende 17 zwischen ihnen hindurchläuft, und zwar in einem durch die feststehenden Führungsleisten definierten zweiten Umfangsbereich 21/2, der sich über einen Bereich von weniger als 180° erstreckt. Bei Einsatz des Zerspanungswerkzeugs 1 werden, wie anhand der Figuren 1 bis 3 oben erläutert, in die Schneiden 9/1 bis 9/5 Schnittkräfte eingeleitet, die sich zu einer Schnittkraft-Resultierenden 17 ergänzen, die auch hier in Figur 4 durch einen Doppelpfeil angedeutet ist. Sie eilt der Schneide 9/1 beziehungsweise Durchmesserlinie 13 um einen spitzen Winkel von kleiner als 45° vor, wie dies aus Figur 4 ersichtlich ist.

Um einen möglichst ratterfreien und vibrationsfreien Lauf des Zerspanungswerkzeugs 1, insbesondere in langen Bohrungen zu gewährleisten, ist vorgesehen, dass es mindestens eine federnde Führungsleiste 23 aufweist, die dafür sorgt, dass das Zerspanungswerkzeug 1 bei der Herstellung und/oder Bearbeitung von Bohrungen von der federnden Führungsleiste 23 gegen die feststehenden Führungsleisten 19/1, 19/2 angedrückt wird. Hier sind wenigstens zwei federnde Führungsleisten vorgesehen. Zwischen den feststehenden Führungsleisten 19/1, 19/2 befindet sich mindestens eine Schneide, deren Flugkreis größer ist als der der feststehenden Führungsleisten. Bei einem Verschleiß dieser Schneide kann es sehr wohl geschehen, dass der Flugkreis der Schneide genauso groß wird wie der der feststehenden Führungsleisten oder sogar kleiner. Dennoch ist durch die federnde Anlage des Zerspanungswerkzeugs 1 an der Bohrungswand sichergestellt, dass dieses sich durch einen ruhigen Lauf auszeichnet und sich überdies nicht in der Bohrung verklemmt.

Anhand der Figuren 1 bis 3 wurde deutlich, dass neben den zwei feststehenden Führungsleisten 21 mindestens zwei federnde Führungsleisten 23 vorgesehen sind. Dabei ist, wie ein Vergleich der Figuren 2 und 4 zeigt, bei fünfschneidigen Zerspanungswerkzeugen 1 die Möglichkeit gegeben, zwei oder drei federnde Führungsleisten 23 vorzusehen, gegebenenfalls auch mehr als drei.

Den Figuren 1 bis 4 ist zu entnehmen, dass die Schneiden 9 jeweils an einer Messerplatte 11 vorgesehen sind, die tangential zur Vorderseite des Zerspanungswerkzeugs 1 in dessen Stirnseite angeordnet sind, also in einer Ebene, auf der die Mittelachse 5 senkrecht steht. Es ist auch möglich, die Messerplatten 11 von der Mittelachse 5 aus gesehen, in die Bildebene in Richtung zur Umfangsfläche 7 unter einem spitzen Winkel abfallen zu lassen.

Die hier dargelegten Erwägungen treffen jedoch auch auf Werkzeuge zu, bei denen die Messerplatten, also nicht mehr oder weniger senkrecht zur Mittelachse 5 angeordnet sind, sondern parallel dazu verlaufen.

## Patentansprüche

1. Zerspanungswerkzeug zur Herstellung und/oder Bearbeitung von Bohrungen, mit
- einem eine Mittelachse (5) und eine Umfangsfläche (7) aufweisenden Grundkörper (3),
- mindestens zwei geometrisch definierten Schneiden (9/1, 9/2), und
- einer Anzahl von die Umfangsfläche (7) des Grundkörpers (3) überragenden Führungsleisten, wobei
- zwei Führungsleisten (19/1,19/2) feststehend ausgebildet und in einem Umfangsabstand von weniger als 180° zueinander angeordnet sind, sodass
- ein zwischen den feststehenden Führungsleisten liegender erster Umfangsbereich (21/1), der sich über mehr als 180° erstreckt, und ein zweiter Umfangsbereich (21/2), der sich über weniger als 180° erstreckt, gebildet werden,
- eine der mindestens zwei Schneiden (9/1,9/2) in dem zweiten Umfangsbereich (21/2) zwischen den feststehenden Führungsleisten (19/1,19/2) angeordnet ist,
- mindestens eine Führungsleiste (23) federnd am Grundkörper (3) des Zerspanungswerkzeugs (1) gelagert ist, und
- die mindestens eine federnde Führungsleiste (23) in dem ersten Umfangsbereich (21/1) angeordnet ist, sodass
- bei der Bearbeitung und/oder Herstellung einer Bohrung das Zerspanungswerkzeug (1) durch die mindestens eine federnd gelagerte Führungsleiste (23) so gegen die Bohrungswand angelegt wird, dass die feststehenden Führungsleisten (19/1,19/2) gegen die Bohrungswand elastisch federnd angedrückt werden,
**dadurch gekennzeichnet, dass**
die geometrisch definierten Schneiden (9/1,9/2), in Umfangsrichtung des Zerspanungswerkzeugs (1) gesehen, mit ungleicher Teilung an der Umfangsfläche (7) des Grundkörpers (3) vorgesehen sind.

2. Zerspanungswerkzeug nach Anspruch 1, **dadurch gekennzeichnet, dass** die feststehenden Führungsleisten (19/1,19/2) in einem Umfangsabstand von weniger als 120° zueinander angeordnet sind.

3. Zerspanungswerkzeug nach Anspruch 1 oder 2, **dadurch gekennzeichnet, dass** die feststehenden Führungsleisten (19/1,19/2) und die Schneiden (9/1,9/2) so angeordnet sind, dass die Resultierende (17) der bei Bearbeitung einer Bohrung mittels des Zerspanungswerkzeugs (1) in die Schneiden eingeleiteten Kräfte ausgehend von der Mittelachse (5) im zweiten Umfangsbereich (21/2) zwischen den festen Führungsleisten (19/1,19/2) verläuft.

4. Zerspanungswerkzeug nach einem der Ansprüche 1 bis 3, **dadurch gekennzeichnet, dass** der Radius des Flugkreises zumindest der zwischen den feststehenden Führungsleisten (19/1,19/2) liegenden Schneide (9) größer ist als der der feststehenden Führungsleisten (19/1,19/2).

5. Zerspanungswerkzeug nach einem der Ansprüche 1 bis 4, **dadurch gekennzeichnet, dass** der Radius des Flugkreises der mindestens einen federnden Führungsleiste (23) größer ist als zumindest der der zwischen den feststehenden Führungsleisten (19/1,19/2) liegenden Schneide und/oder der der feststehenden Führungsleisten.

6. Zerspanungswerkzeug nach einem der Ansprüche 1 bis 5, **dadurch gekennzeichnet, dass** die Schneiden (9) an Messerplatten (11) ausgebildet sind, die in in die Umfangsfläche (7) des Grundkörpers (3) eingebrachte Nuten angeordnet sind.

7. Zerspanungswerkzeug nach einem der Ansprüche 1 bis 6, **dadurch gekennzeichnet, dass** die feststehenden Führungsleisten (19/1,19/2) mit dem Grundkörper (3) des Zerspanungswerkzeugs (1) fest verbunden sind.

8. Zerspanungswerkzeug nach einem der Ansprüche 1 bis 7, **dadurch gekennzeichnet, dass** die mindestens eine federnde Führungsleiste (23) eine dem Grundkörper (3) zugewandte Unterseite und dass der Grundkörper eine der federnden Führungsleiste zugewandte Auflagefläche (27) aufweist, und dass zwischen der Unterseite (29) und der Auflagefläche (27) nachgiebige Mittel angeordnet sind.

9. Zerspanungswerkzeug nach einem der Ansprüche 1 bis 8, **dadurch gekennzeichnet, dass** eine radial außen liegende Fläche mindestens einer Führungsleiste verschleißfestes Material aufweist oder daraus besteht.

10. Zerspanungswerkzeug nach einem der Ansprüche 1 bis 9, **dadurch gekennzeichnet, dass** es als Reibahle ausgebildet ist.

## Claims

1. Cutting tool for producing and/or machining bores, having
- a main body (3) having a central axis (5) and a circumferential surface (7), and
- at least two geometrically defined cutting edges (9/1, 9/2), and
- a number of guide rails projecting beyond the circumferential surface (7) of the main body (3), wherein
- two guide rails (19/1, 19/2) are configured to be fixed and are arranged at a circumferential distance of less than 180° from one another, so that
- a first circumferential region (21/1) lying between the fixed guide rails and extending over more than 180° and a second circumferential region (21/2) extending over less than 180° are formed,
- one of the at least two cutting edges (9/1, 9/2) is arranged in the second circumferential region (21/2) between the fixed guide rails (19/1, 19/2),
- at least one guide rail (23) is resiliently mounted on the main body (3) of the cutting tool (1), and
- the at least one resilient guide rail (23) is arranged in the first circumferential region (21/1), so that
- during machining and/or production of a bore, the cutting tool (1) is placed against the bore wall by the at least one resiliently mounted guide rail (23) in such a way that the fixed guide rails (19/1, 19/2) are pressed against the bore wall in an elastically resilient manner,
**characterised in that** the geometrically defined cutting edges (9/1, 9/2), viewed in the circumferential direction of the cutting tool (1), are provided with unequal partition on the circumferential surface (7) of the main body (3).

2. Cutting tool according to claim 1, **characterised in that** the fixed guide rails (19/1, 19/2) are arranged at a circumferential distance of less than 120° from one another.

3. Cutting tool according to claim 1 or 2, **characterised in that** the fixed guide rails (19/1, 19/2) and the cutting edges (9/1, 9/2) are arranged in such a way that the resultant (17) of the forces introduced into the cutting edges during machining of a bore by means of the cutting tool (1) extends from the central axis (5) in the second circumferential region (21/2) between the fixed guide rails (19/1, 19/2).

4. Cutting tool according to one of the claims 1 to 3, **characterised in that** the radius of the flight circle of at least the cutting edge (9) located between the fixed guide rails (19/1, 19/2) is larger than that of the fixed guide rails (19/1, 19/2).

5. Cutting tool according to one of the claims 1 to 4, **characterised in that** the radius of the flight circle of the at least one resilient guide rail (23) is larger than at least that of the cutting edge lying between the fixed guide rails (19/1, 19/2) and/or that of the fixed guide rails.

6. Cutting tool according to one of claims 1 to 5, **characterised in that** the cutting edges (9) are formed on cutter plates (11) which are arranged in grooves made in the circumferential surface (7) of the main body (3).

7. Cutting tool according to one of the claims 1 to 6, **characterised in that** the fixed guide rails (19/1, 19/2) are firmly connected to the main body (3) of the cutting tool (1).

8. Cutting tool according to one of claims 1 to 7, **characterised in that** the at least one resilient guide rail (23) has an underside facing the main body (3) and **in that** the main body has a bearing surface (27) facing the resilient guide rail, and **in that** resilient means are arranged between the underside (29) and the bearing surface (27).

9. Cutting tool according to one of claims 1 to 8, **characterised in that** a radially outer surface of at least one guide rail comprises or consists of wear-resistant material.

10. Cutting tool according to one of the claims 1 to 9, **characterised in that** it is configured as a reamer.

## Revendications

1. Outil de coupe pour la réalisation et/ou l'usinage d'alésages, comportant
- un corps de base (3) ayant un axe central (5) et une surface circonférentielle (7),
- au moins deux arêtes de coupe géométriquement définies (9/1, 9/2), et
- un certain nombre de bandes de guidage faisant saillie au-delà de la surface circonférentielle (7) du corps de base (3), où
- deux bandes de guidage (19/1, 19/2) sont de conception fixe et sont disposées à une distance circonférentielle inférieure à 180° l'une de l'autre, de sorte que
- une première région circonférentielle (21/1) s'étendant sur plus de 180° et une seconde région circonférentielle (21/2) s'étendant sur moins de 180° sont formées entre les bandes de guidage fixes,
- l'une des au moins deux arêtes de coupe (9/1, 9/2) est disposée dans la deuxième région circonférentielle (21/2) entre les bandes de guidage fixes (19/1, 19/2),
- au moins une bande de guidage (23) est montée de manière élastique sur le corps de base (3) de l'outil de coupe (1), et
- l'au moins une bande de guidage élastique (23) est disposée dans la première région circonférentielle (21/1), de sorte que
- lors de l'usinage et/ou de la production d'un alésage, l'outil de coupe (1) est placé contre la paroi de l'alésage par la au moins une bande de guidage (23) montée de manière élastique de telle sorte que les bandes de guidage fixes (19/1, 19/2) sont pressées contre la paroi de l'alésage de manière élastiquement résiliente,
**caractérisé en ce que** les arêtes de coupe géométriquement définies (9/1, 9/2), vues dans la direction périphérique de l'outil de coupe (1), sont prévues avec un pas inégal sur la surface périphérique (7) du corps de base (3).

2. Outil de coupe selon la revendication 1, **caractérisé en ce que** les bandes de guidage fixes (19/1, 19/2) sont disposées à une distance circonférentielle inférieure à 120° les unes des autres.

3. Outil de coupe selon la revendication 1 ou 2, **caractérisé en ce que** les bandes de guidage fixes (19/1, 19/2) et les arêtes de coupe (9/1, 9/2) sont disposées de telle sorte que la résultante (17) des forces introduites dans les arêtes de coupe lors de l'usinage d'un alésage au moyen de l'outil de coupe (1) s'étende depuis l'axe central (5) dans la deuxième zone périphérique (21/2) entre les bandes de guidage fixes (19/1, 19/2).

4. Outil de coupe selon l'une des revendications 1 à 3, **caractérisé en ce que** le rayon du cercle de coupe d'au moins l'arête de coupe (9) située entre les bandes de guidage fixes (19/1, 19/2) est supérieur à celui des bandes de guidage fixes (19/1, 19/2).

5. Outil de coupe selon l'une des revendications 1 à 4, **caractérisé en ce que** le rayon du cercle de coupe de la au moins une bande de guidage élastique (23) est supérieur au moins à celui de l'arête de coupe située entre les bandes de guidage fixes (19/1, 19/2) et/ou à celui des bandes de guidage fixes.

6. Outil de coupe selon l'une des revendications 1 à 5, **caractérisé en ce que** les arêtes de coupe (9) sont formées sur des plaques coupantes (11) qui sont disposées dans des rainures réalisées dans la surface périphérique (7) du corps de base (3).

7. Outil de coupe selon l'une des revendications 1 à 6, **caractérisé en ce que** les bandes de guidage fixes (19/1, 19/2) sont reliées solidement au corps de base (3) de l'outil de coupe (1).

8. Outil de coupe selon l'une des revendications 1 à 7, **caractérisé en ce que** la au moins une bande de guidage élastique (23) présente une face inférieure tournée vers le corps de base (3) et **en ce que** le corps de base présente une surface d'appui (27) tournée vers la bande de guidage élastique, et **en ce que** des moyens élastiques sont disposés entre la face inférieure (29) et la surface d'appui (27).

9. Outil de coupe selon l'une quelconque des revendications 1 à 8, **caractérisé en ce qu'**une surface radialement extérieure d'au moins une bande de guidage comprend ou consiste en un matériau résistant à l'usure.

10. Outil de coupe selon l'une des revendications 1 à 9, **caractérisé en ce qu'**il est conçu comme un alésoir.
